# EUROPÄISCHE PATENTANMELDUNG

(11) **EP 4 253 007 A2**
(43) Veröffentlichungstag der Anmeldung: **04.10.2023**
(21) Anmeldenummer: 23183647.9
(22) Anmeldetag: 05.07.2023
(51) Int. Cl.: B29C 64/118, B29C 64/188, B29C 64/218, B29C 64/30, B33Y 10/00, B33Y 30/00, B33Y 40/20

(54) **VERFAHREN ZUR OBERFLÄCHENBEARBEITUNG EINES 3D-DRUCKOBJEKTES**

(71) Anmelder: Apium Additive Technologies GmbH, 76187 Karlsruhe (DE)
(72) Erfinder: Scholz, Julian, 76135 Karlsruhe (DE); Kracher, Benjamin, 76571 Gaggenau (DE)
(74) Vertreter: Avon, Philipp Marcel

(57) **Zusammenfassung**

Die Erfindung betrifft ein Verfahren zur Oberflächenbearbeitung eines 3D-Druckobjektes, wobei ein Formkörper eines Formwerkzeuges an der Oberfläche von wenigstens einem von einem 3D-Drucker extrudierten Extrusionsstranges entlanggeführt wird und der Formkörper (1) sich dabei um eine Rotationsachse mit einer festgelegten Rotationsgeschwindigkeit dreht.

Für industrielle und medizinische Anwendungen werden immer häufiger Bauteile aus dem FFF-Verfahren verwendet. Dies ist möglich, da die Bauteilqualität durch eine größere Materialauswahl und stetiger Weiterentwicklung der Druckmaschinen zunimmt. Werden Bauteile für den professionellen Einsatz gefertigt sind oft Beschriftungen oder Kennzeichnungen derselben nötig.

Daher hat es sich die hier beschriebene Erfindung zur Aufgabe gemacht, ein Verfahren bereitzustellen, mit dem die Oberflächen eines 3D-Druckobjektes bearbeitet werden kann, unabhängig von dem gedruckten Material und ohne dabei die Fertigungszeit oder Kosten für die Herstellung zu erhöhen.

Dies gelingt dem erfindungsgemäßen Verfahren dadurch, dass die Rotationsgeschwindigkeit des Formkörpers entlang der Bewegungsrichtung des Formwerkzeugs verringert oder beschleunigt wird, sodass an der mit dem Formkörper in Kontakt befindlichen Oberfläche des wenigstens einen Extrusionsstranges respektive ein positiver oder negativer Schlupf entsteht, wodurch eine raue oder glatte Oberfläche gebildet wird.

## Beschreibung

Die Erfindung betrifft ein Verfahren zur Oberflächenbearbeitung eines 3D-Druckobjektes, wobei ein Formkörper eines Formwerkzeuges an einer Oberfläche von wenigstens einem von einem 3D-Drucker extrudierten Extrusionsstranges entlanggeführt wird und der Formkörper sich dabei um eine Rotationsachse mit einer bestimmten Rotationsgeschwindigkeit dreht.

Für industrielle und medizinische Anwendungen werden immer häufiger Bauteile aus dem FFF-Verfahren verwendet. Dies ist möglich, da die Bauteilqualität durch eine größere Materialauswahl und stetiger Weiterentwicklung der Druckmaschinen zunimmt.

Ein Beispiel hierfür ist die Verwendung eines Formwerkzeuges, wie es beispielsweise in der DE 10 2021 127 824 A1 beschrieben ist. Es handelt sich dabei um einen hybriden Prozess, welcher ein klassisches 3D-Druckverfahren um einen weiteren Formprozess erweitert. Hierbei werden die außenliegenden Flächen der Extrusionsstränge währen des Druckprozesses mit einem zusätzlichen Formwerkzeug nachgeformt und geglättet. Dadurch ist eine signifikante Steigerung in der Oberflächengüte möglich.

Werden Bauteile für den professionellen Einsatz gefertigt sind oft Beschriftungen oder Kennzeichnungen nötig. Dies können beispielsweise Serien- oder Identifikationsnummern für eine bessere Rückverfolgung und Verbesserung des Qualitätsmanagements sein. Weitere Anwendungen sind Produktbezeichnungen bzw. Zertifikationskennzeichen, welche in manchen Fällen zwingend am Bauteil angebracht werden müssen. Auch aus ästhetischen Gründen kann es notwendig sein ein Bauteil zu verzieren, beispielsweise mit Logos und Grafiken.

Aus dem Stand der Technik sind hierbei unterschiedliche Ansätze bekannt. Beispielsweise gibt es im Bereich des FFF-Verfahrens eine Vielzahl von Maschinen, die bei Erstellung eines 3D-Druckobjektes mit unterschiedlichen Farben arbeiten können. Dabei ist es möglich entsprechende Beschriftungen durch eine sich absetzende Farbe zu realisieren. Jedoch ist bei technischen Anwendungen die Materialauswahl begrenzt und es gibt selten verschiedene Farben. Außerdem steigt die Druckzeit beim Drucken von mehreren Materialien, durch den häufigen Wechsel, sehr stark an.

Ferner ist das Laserbeschriften von Bauteilen aus dem Stand der Technik bekannt. Hierbei wird ein Bauteil in einem nachfolgenden Prozessschritt mit Hilfe eines Lasers beschriftet. Da sich nicht jeder Kunststoff für diese Art von Verfahren eignet, ist dieses Verfahren nur bei einer begrenzten Anzahl von Druckmaterialen möglich. Außerdem entstehen durch den zusätzlichen Prozessschritt Kosten und die Fertigungszeit steigt ebenfalls an.

Daher hat es sich die hier beschriebene Erfindung zur Aufgabe gemacht, ein Verfahren bereitzustellen, mit dem die Oberfläche eines 3D-Druckobjektes bearbeitet werden kann, unabhängig von dem gedruckten Material und ohne dabei die Fertigungszeit oder Kosten für die Herstellung zu erhöhen.

Diese Aufgabe wird durch ein Verfahren gemäß dem unabhängigen Anspruch 1 gelöst. Vorteilhafte Ausgestaltungen des erfindungsgemäßen Verfahrens können den abhängigen Ansprüchen entnommen werden.

Erfindungsgemäß handelt es sich um ein Verfahren zur Oberflächenbearbeitung eines 3D-Druckobjektes, wobei ein Formkörper eines Formwerkzeuges an der Oberfläche von wenigstens einem von einem 3D-Drucker extrudierten Extrusionsstranges entlanggeführt wird und der Formkörper sich dabei um eine Rotationsachse mit einer bestimmten Rotationsgeschwindigkeit dreht.

Das Verfahren zeichnet sich dadurch aus, dass die Rotationsgeschwindigkeit entlang der Bewegungsrichtung des Formwerkzeuges verringert oder beschleunigt wird, sodass an der mit dem Formkörper in Kontakt befindlichen Oberfläche des wenigstens einen Extrusionsstranges ein positiver oder negativer Schlupf entsteht, wodurch eine raue oder glatte Oberfläche gebildet wird.

Liegt kein Schlupf an, weist dieser also einen Wert von 0 auf, so ist die Rotationsgeschwindigkeit des Formkörpers derart eingestellt, dass keine Relativbewegung zwischen der Oberfläche des wenigstens einen Extrusionsstranges und der Oberfläche des Formkörpers besteht. Mit anderen Worten: Der Formkörper rollt auf der Oberfläche des Extrusionsstranges sauber ab und drückt überschüssiges Material des Extrusionsstranges an die Oberfläche an.

Im Falle eines positiven Schlupfs in Bewegungsrichtung des Formwerkzeuges ist die Rotationsgeschwindigkeit des Formkörpers beschleunigt. Durch diese Relativbewegung zwischen Formkörper und der Oberfläche des wenigstens einen Extrusionsstranges wird Material des Extrusionsstranges entgegen der Bewegungsrichtung des Formwerkzeuges gefördert und eine raue Oberfläche gebildet. Bei einem negativen Schlupf wird die Rotationsgeschwindigkeit des Formkörpers entlang der Bewegungsrichtung des Formwerkzeuges verlangsamt, sodass das Material des Extrusionsstranges an die Oberfläche angedrückt und zusätzlich in Bewegungsrichtung des Formwerkzeuges gefördert wird. Hierdurch wird eine glatte Oberfläche erreicht.

Alternative Verfahren, um ein Druckteil zu beschriften, erfordern alle einen zusätzlich Prozessschritt. Durch die Integration der Beschriftung in den Formprozess kann ein zusätzlicher Prozessschritt vermieden werden und somit das Bauteil schneller und kostengünstiger hergestellt werden.

Dabei ist ebenfalls denkbar einzelne Abschnitte bzw. Flächen eines Bauteils mit unterschiedlichen Rauheitsgraden zu Formen. Dies kann aus ästhetischen Gründen gemacht werden oder aber zur Kennzeichnung von bestimmten Flächen.

Im Folgenden wird die Erfindung anhand eines Ausführungsbeispiels näher erläutert.

Es zeigt:
- Fig. 1: eine skizzenhafte Darstellung des erfindungsgemäßen Verfahrens zur Oberflächenbearbeitung eines 3D-Druckobjektes in einer Draufsicht, sowie
- Fig. 2: ein mit dem erfindungsgemäßen Verfahren bearbeitetes 3D-Druckobjekt.

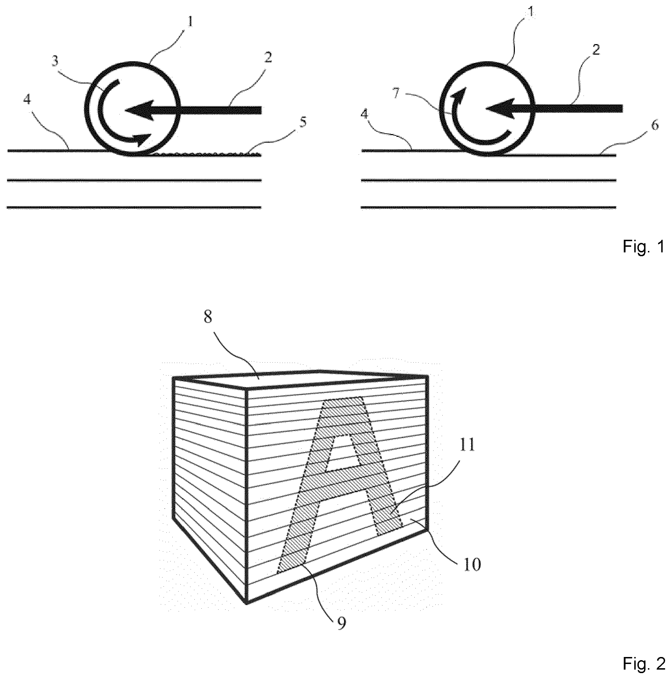

Figur 1 zeigt eine skizzenhafte Darstellung des erfindungsgemäßen Verfahrens zur Oberflächenbearbeitung eines 3D-Druckobjektes 8 in einer Draufsicht. Das linke Schaubild zeigt die erfindungsgemäße Oberflächenbearbeitung mit einem Formkörper 1 an der Oberfläche eines Extrusionsstranges eines 3D-Druckobjektes mit einem positiven Schlupf 3, wohingegen das rechte Schaubild das erfindungsgemäße Verfahren mit einem negativen Schlupf 7 zeigt.

Die Ansteuerung des Formkörpers 1 ist dabei so gestaltet, dass der Schlupf zwischen Bauteiloberfläche 4 und Formgeometrie 1 eingestellt werden kann. Für einen Schlupfwert von 0 ist die Rotationsgeschwindigkeit des Formkörpers derart eingestellt, dass keine Relativbewegung zwischen der Oberfläche des Formkörpers 1 und der ungeformten Oberfläche 4 des Extrusionsstranges bzw. des 3D-Druckobjektes 8 herrscht. Der Formkörper 1 rollt also sauber auf der ungeformten Oberfläche 4 des wenigstens einen Extrusionsstranges des 3D-Druckobjektes 8 ab und das Material wird angedrückt. Um einen negativen Schlupfwert 7 zu erreichen, wird die Rotationsbewegung bzw. Drehbewegung des Formkörpers 1 um dessen Rotationsachse verlangsamt. Es herrscht also eine Relativbewegung zwischen der mit dem Extrusionsstrang in Kontakt befindlichen Oberfläche des Formkörpers 1 und der ungeformten Oberfläche 4 des Extrusionsstranges. Das Material des Extrusionsstranges, insbesondere überschüssiges Material, wird unter diesen Umständen an die Oberfläche des Extrusionsstranges bzw. des 3D-Druckobjektes 8 angedrückt und zusätzlich in Bewegungsrichtung 2 des Formwerkzeuges gefördert. Dadurch stellt sich eine sehr glatte Oberfläche 6 ein.

Zur Erreichung eines positiven Schlupfwerts 3 wird die Rotations- bzw. Drehbewegung des Formkörpers 1 um dessen Rotationsachse beschleunigt, wodurch sich ebenfalls eine Relativbewegung, zwischen der mit dem Extrusionsstrang in Kontakt befindlichen Oberfläche des Formkörpers 1 und der ungeformten Oberfläche 4 des Extrusionsstranges bzw. des 3D-Druckobjektes 8, einstellt. Allerdings wird hier das Material entgegen der Bewegungsrichtung 2 des Formwerkzeuges gefördert und es wird eine raue Oberfläche 5 erhalten. Somit lässt sich über den Schlupfwert die Rauheit bzw. Glattheit der Oberfläche 5,6 eines Extrusionsstranges bzw. eines 3D-Druckobjektes 8 bestimmen.

Wird der Schlupf beim Verfahren des Formwerkzeuges sehr schnell geändert, so können innerhalb kurzer Verfahrstrecken des Formwerkzeuges unterschiedliche Oberflächenbeschaffenheiten eingestellt werden. Beispielsweise kann über eine Software die Kontur einer Beschriftung 9, Grafik bzw. eines Logos auf der Oberfläche des zu druckenden Bauteils platziert werden, wie in Figur 2 exemplarisch dargestellt. Dabei werden die Flächen innerhalb der Beschriftung beispielsweise mit einem positiven Schlupf 3 und die Flächen außerhalb mit einem negativem Schlupf 7 bearbeitet. Dadurch werden glatte Bereiche 10 und raue Bereiche 11 gebildet. So ist die Beschriftung 9 auf der Bauteiloberfläche des 3D-Druckobjektes 8 rauer, setzt sich also aus rauen Bereiche 11 der Oberfläche zusammen, und hebt sich daher vom Rest, nämlich den glatten Bereichen 10, ab. Die zu erreichende Auflösung einer solchen Beschriftung ist von der Formschichthöhe in vertikaler Aufbaurichtung abhängig. In horizontaler Richtung kann die Auflösung einer Beschriftung beliebig hoch gewählt werden.

Somit ist vorstehend ein Verfahren zur Oberflächenbearbeitung eines 3D-Druckobjektes offenbart, mit dem eine Kennzeichnung eines 3D-Druckobjektes ermöglicht ist, unabhängig von dem gedruckten Material und ohne dabei die Fertigungszeit oder Kosten für die Herstellung zu erhöhen.

### BEZUGSZEICHENLISTE

- 1: Formkörper
- 2: Bewegungsrichtung des Formwerkzeuges
- 3: Rotationsrichtung des Formkörpers mit positivem Schlupf
- 4: Ungeformte Oberfläche
- 5: Raue Oberfläche
- 6: Glatte Oberfläche
- 7: Rotationsrichtung des Formkörpers mit negativem Schlupf
- 8: Druckobjekt
- 9: Beschriftung
- 10: Glatter Bereich
- 11: Rauer Bereich

## Patentansprüche

1. Verfahren zur Oberflächenbearbeitung eines 3D-Druckobjektes (8), wobei ein Formkörper (1) eines Formwerkzeuges an der Oberfläche von wenigstens einem von einem 3D-Drucker extrudierten Extrusionsstranges entlanggeführt wird,
wobei der Formkörper (1) sich dabei um eine Rotationsachse mit einer bestimmten Rotationsgeschwindigkeit dreht,
wobei die Rotationsgeschwindigkeit des Formkörpers (1) entlang der Bewegungsrichtung des Formwerkzeugs verringert oder beschleunigt wird, sodass an der mit dem Formkörper (1) in Kontakt befindlichen Oberfläche (4) des wenigstens einen Extrusionsstranges ein positiver (3) oder negativer Schlupf (7) entsteht, wodurch eine raue (5) oder glatte Oberfläche (6) gebildet wird.

2. Verfahren nach Anspruch 1, **dadurch gekennzeichnet, dass** die Rotationsgeschwindigkeit des Formkörpers (1) um dessen Rotationsachse entlang der Bewegungsrichtung des Formwerkzeuges zunächst verringert und anschließend beschleunigt wird oder vice versa.

3. Verfahren nach Anspruch 2, **dadurch gekennzeichnet, dass** die Verringerung oder Beschleunigung der Rotationsgeschwindigkeit des Formkörpers entlang der Bewegungsrichtung des Formwerkzeugs mehrfach stattfindet.

4. Verfahren nach einem der vorhergehenden Ansprüche 1 bis 3, **dadurch gekennzeichnet, dass** die Verringerung der Rotationsgeschwindigkeit des Formkörpers mittels einer im Formwerkzeug befindlichen Bremse, insbesondere einer elektromagnetischen Bremse, erfolgt.

5. Verfahren nach einem der vorhergehenden Ansprüche 1 bis 4, **dadurch gekennzeichnet, dass** die Beschleunigung und/oder Verringerung der Rotationsgeschwindigkeit des Formkörpers mittels eines im Formwerkzeuges befindlichen elektrischen Antriebs, insbesondere eines Schrittmotors, erfolgt.

6. Vorrichtung zum Ausführen eines Verfahrens gemäß einem der vorhergehenden Ansprüche 1 bis 5, umfassend einen Druckkopf zum Extrudieren eines Extrusionsstranges und ein Formwerkzeug mit einem Formkörper.

7. Computerprogramm zum Ausführen eines Verfahrens gemäß einem der vorhergehenden Ansprüche 1 bis 5 mit einer Vorrichtung gemäß Anspruch 6.
